# EUROPEAN PATENT APPLICATION

(11) **EP 4 790 612 A1**
(43) Date of publication of application: **12.08.2026**
(21) Application number: 25156997.6
(22) Date of filing: 11.02.2025
(51) Int. Cl.: G06Q 10/0631

(54) **METHOD AND DEVICE FOR AUTOMATED COMPOSITION OF A TECHNICAL SYSTEM COMPRISING ONE OR MORE TECHNICAL COMPONENTS**

(71) Applicant: Theben AG, 72401 Haigerloch (DE)
(72) Inventor: Gulde, Thomas, 72351 Geislingen (DE); Herrmann, Robin, 72414 Rangendingen (DE)
(74) Representative: Westphal, Mussgnug & Partner Patentanwälte mbB

(57) **Abstract**

Provided are a method for automated composition of a technical system which technical system comprises one or more technical components, wherein the method comprises the automated steps of a) receiving a composition request comprising features of the system to be composed by a receiving device; b)identifying the objects and/or features of the requested technical system that is to be composed by an identification device based on the received composition request; c) transforming the identified objects and/or features of the technical system into a requested vector representation by an embedding device; d) comparing the requested vector representation of the technical system and vector representations of technical systems composed from available components by means of a comparator device, wherein the comparing involves the use of a vector space space in order to determine whether vector representations of technical systems composed from available components that do not match the requested vector representation exactly represent a viable composition of the requested technical system; and e) outputting an obtained set of viable compositions of the requested technical system by an output device and a device for automated composition of a technical system using said method.

## Description

There is a large and growing number of technical systems that are adapted on a case by case basis to the demands of a specific application case. One specific example for such a technical system are smart home systems.

For example, in the framework of a smart home system it may be desirable to identify that a movement has occurred in order to determine whether an action, e.g. switching illumination devices, heating devices or ventilation devices on or off, is to be initiated. There is, however, a large variety of different movement sensors available, which have different properties regarding a number categories. By means of example, only a few of these categories are discussed here, in order to allow for better understanding of the invention, but application of the invention is by no means limited to these examples.

One such category is the technique used for detection, as there are, e.g., passive infrared sensors, camera-based sensors, ultrasound sensors and HF/radar based sensors available on the market.

Another category may be the voltage supply required by the respective sensors. E.g., there are movement sensors on the market that rely on a 230V power supply, whereas others require a 24V power supply.

Yet another category may be the ability of the sensors to communicate in a given bus system, e.g. using wireless protocol standards like e.g. ZigBee, Z-wave, WLAN (IEEE-802.11-standards), Bluetooth or EnOcean or using cable-based protocols such as KNX, the LCN-Bus, Crestron or homematic IP wired.

Also, the environmental conditions for which the respective sensors are suited can form a category. Some sensors may be configured to be used in an indoor environment only, others may be operable under protected outdoor conditions whereas still others can be exposed to outdoor conditions like rain, storm and dust.

From the above, it becomes evident that even the selection of a single component of a technical system may require a considerable amount of technical insight; even more so if a perfect match cannot be found. However, in complex technical systems, such as a smart home system, a large variety of different components needs to be matched, making choices that are sound and entirely reasonable in one system a no-go in another system, and preferably also optimized beyond the mere matching.

For this reason, up to now the composition of suitable technical systems has been performed by experienced, technically qualified employees based on specifications of the desired properties of the technical system received by these employees from potential customers. However, due to the complexity of the system to be composed and the variability of its components, this means that a considerable amount of working time of a highly skilled, experienced professional has to be invested even before it is sure that the customer will place an order.

Conversely, due to the amount of time needed to compose just a single possible variant of the technical system, it is unlikely that all viable options will be created, which is disadvantageous for the potential customer because he does not get to choose from a complete selection of choices, but also for the company that answers the customer's request, e.g. if the proposed solution involves parts that are currently out of stock, so that no offer can be made, whereas there is another viable solution for which all parts would be available, but this solution is never composed.

Therefore, the problem to be solved by the invention is enabling a machine to compose the technical system from technical components based on requests received by a potential customer.

This problem is solved by a method with the features of independent claim 1 and a device with the features of independent claim 6. The respective dependent claims describe further optional features that may be advantageous in some embodiments.

The method for automated composition of a technical system which technical system comprises one or more technical components, comprises the following automated steps according to the invention:
a) receiving a composition request comprising features of the system to be composed by a receiving device.

This receiving device receives the composition request, preferably as issued by the requesting person and transforms it, if necessary, into a format that can be processed by a computer system. E.g., if the request is received in writing on paper, the receiving device may be configured to cooperate with a scanner, preferably including character recognition, so that the composition request is transformed into a file, e.g. a pdf file for further processing. However, the receiving device may also be configured to accept e-mail formats, including pictures embedded therein and/or file formats provided by standard office software, audio or video file formats etc.

The composition request will typically comprise information related to the technical system to be composed. E.g., one of the requirements set by a potential customer may be that the system comprises a movement sensor with a given set of technical specifications, e.g. a supply voltage of 24V, a range of 6m and wireless communication. Note that in this example the request leaves several parameters that are defined for a given existing movement sensor undefined, e.g. the specific detection technique and the specific communication protocol.

After step a), the composition request is now in a format that can be processed further by a machine such as a computer system, which comprises or forms an identification device which is arranged, e.g, by executing program code, to perform step b) of the method, i.e.

b) identifying of the objects and/or features of the requested technical system that is to be composed based on the received composition request with an identification device. In the above, simplified example, the identification device would analyse the information and determine the features "movement sensor", "supply voltage 24V", "range 6m", "wireless".

Preferably but not necessarily, it may also analyse the context of these features in order to establish whether there are indications that a given feature is a must-have feature, which can influence which available technical systems can be considered to be acceptable solutions.

For example, if the request is directed at a completely new system, using a different wireless communication protocol than the one that is mentioned in the request can be acceptable. Conversely, for an expansion of an existing system, this is typically a no-go.

The thus identified objects are then transformed in step c) of the method, i.e.

c) transforming the identified objects and/or features of the technical system into a requested vector representation by an embedding device. Examples for the coordinate axes that are used in such a vector representation are technical specifications, design specifications and/or parameters of the location where the object is to be used. E.g., in the above example axes used for the description of the request may be "device type", "supply voltage", "range" and "communication type". Note that as there is no specific communication protocol requested, the coordinate axis "communication protocol" is not used in this vector representation. Likewise, as the method of detection is not specified, this axis is not used in this description either.

Object-describing vectors are one possibility of transforming real world objects into a numerical/mathematical space. The respective vectors may, e.g., describe semantic relations and similarities between objects. For each coordinate axis a value is defined. Possible approaches for the generation of object-describing vectors are, e.g.:
- Word embeddings, such as Word2Vec-embeddings, which transform words into vectors, wherein similar words are located at positions in the vector space that are separated by a small distance. Similar approaches can be used to embed other objects, like symbols or objects/images in vectors.
- Image vectors, which is an approach used for image processing that transforms images into vectors. One way to realize this approach are techniques such as Convolutional Neural Networks (CNNs). An image is transformed into a vector representing features of the image (e.g. edges, colours, textures).
- Audio vectors, where vectors are be generated in similar ways as for images, e.g. by application of deep learning models.
- Feature extraction, where relevant features are extracted from objects and embedded into vectors. This is possible for text, images, audio signals and other data.
- Machine learning models: Neural networks and other machine learning models can be used to generate representative models for new objects. These models learn to register certain relations between objects.
- Transfer learning, wherein trained models are used to generate vectors for new objects. This approach is especially valuable if only limited training data are available.
- Transformer architectures, wherein input data is converted into an n-dimensional embedding which is then processed by stacks of modules which include mostly feed-forward and multi-head attention layers.

According to preferred embodiments of the invention, the vectorization is performed within a multi-model approach by means of a cascaded or multistage process, respectively, thus performing the vectorization stepwise for different hierarchy levels with different models. This brings about a considerable increase in performance. Optionally, the result of the vectorization is stored in a data storage.

Once the transforming has been performed by the embedding device, step d) of the method is performed by a comparator device:
d) comparing the requested vector representation of the technical system and vector representations of technical systems composed from available components by means of a comparator device, wherein the comparing involves the use of a vector space in order to determine whether vector representations of technical systems composed from available components that do not match the requested vector representation exactly represent a viable composition of the requested technical system.

Preferably, vector representations of available components from which technical systems can be composed are made available and stored in a database. One possibility to do so in an automated way, avoiding a manual input by a user (which is in principle also possible) is performing steps a to c) using the available technical documentation of the respective components as training data or user requests.

These vector representations of individual components will typically be limited to a subspace of the vector which represents the requested system if the request comprises several different technical components. This is sufficient, however, as the requested vector representation will be in a vector space that is spanned by the subspaces corresponding to the vector representations of several different available components or projections thereof (if the request leaves parameters of the components undefined). Accordingly the individual vector representations of the available components or the respective projections can simply be combined/stacked to create a system with several components.

The comparator device attempts to match the requested vector representation of the technical system by using vector representations of available technical objects. In a first stage, it can be attempted to find identical representations, which is the case if all components of the respective vectors (or at least those used in the requested vector representation) are equal and, accordingly the length and the orientation of the vectors are identical.

It may, however, happen that such an identity cannot be achieved. Using the example request discussed above, there may be movement sensors available with a range of either 4m or 8m but that match all properties apart from the desired range or movement sensors with all properties apart from the desired range, but not the operating voltage.

According to a preferred embodiment of the invention, at least for such cases a vector space is used, e.g. by using a classifier for defining/creating the vector space. The vector space allows for defining technical systems that do not meet the request exactly but can be used for this type of request. E.g., it may be possible to use a movement sensor with a range of 8m without any loss of functionality (albeit potentially with higher cost) or 4m with a slight loss of functionality or with an operating voltage of 230V rather than 24V. It should be noted that the vector space may be dependent on the specific request.

In a preferable embodiment of the invention, this vector sphere is defined using training data and/or historical data.

Preferably, a similarity value is determined between the technical systems that can be formed within this vector space and the requested technical system, e.g. by a second comparator device. This similarity value can also be used to rule out combinations of available components that may end up in the vector space but are in fact incompatible. E.g., if two wireless movement sensors are requested without any specification of a communication protocol, a solution with two wireless movement sensors with different communication protocols could potentially be located in the vector space, but is clearly not a useful solution for the requested system.

After this stage, step e) is performed:
e) outputting an obtained set of viable compositions of the requested technical system by an output device.

In this step, the viable technical systems that can be realized and meet the request as well as possible are output and readied for communication to the requesting potential customer. Optionally, a ranking can be provided, which can be based on the similarity to the requested system. However, in some embodiments of the invention other factors may be used to modify this result, e.g. price or availability of the components.

As the method is an automated method, all of the above steps are executed automatically, e.g. by means of one or more suitably programmed computer systems, and do not involve human intervention.

A preferred way to determine that a given combination of technical components is in fact suitable for providing the requested features is a comparison by means of a cascaded multi-model approach that is performed using a classifier.

Next, a detailed example for an application of the method is presented.

An example for a composition request according to this invention is a project description for a major building project that is sent to a potential supplier to obtain in response a proposal which equipment could/should be used in order to realize the requested functionality. For example, a major building company may plan a new housing estate, whose houses or apartments are fully equipped with integrated smart home systems. The corresponding project description will typically describe these smart home systems in terms of a desired functionality and potentially also in terms of the infrastructure that is available to support these smart home systems, e.g. the availability of power supplies for smart home devices or possible communication systems that are already available or that are to be used in other subprojects.

This project decription is nowadays typically sent in electronic form, e.g. as a pdf or a structured data format and can thus be received directly by or fed into a receiving device and interpreted automatically. During this interpretation, the features of the technical system are derived from the received description in an automated way.

The respective derivation may be obtained using information that can be extracted from a pool of sample cases that can comprise historical requests that were processed by experienced company employees and the historical systems that they created in response to these request. E.g., if the project description mentions the need for an automated lighting control in a 4 room apartment, analysis of historical requests will yield **e.g.** the number of sensor devices and control devices, respectively, typical required sensing ranges, as well as a requirements profile (e.g. that the sensors and control devices need not be waterproof, in contrast to a situation in which the project description would mention the need for automated lighting control in a publicly accessible outside area of an apartment complex).

Accordingly, using automated language processing, preferable supplemented by automated learning from historic sample cases, the identification of the objects and/or features of the requested technical system that is to be composed can be obtained by an identification device based on the received composition request.

The identified objects and/or features of the technical system are then transformed into a requested vector representation in a vector space by an embedding device, preferably using a vector-embedding technology like Word2Vec.

Historical systems which were created in response to identical or similar requests may also be transformed into a vector representation in this vector space in order to be able to define a metrics for similarity/acceptable deviations with respect to certain dimensions of the vector space and/or a sphere within the vector space into which an acceptable technical system that meets the requirements of the project description that is being processed has to fall and thus in order to provide input to be used by the comparator device.

In addition, technical descriptions of available system components can be used to create representations of these components in the vector space by the embedding device. These representations can be understood as building blocks or a basis of the subspace of the vector space that can be created using these components. The building blocks are then combined in order to attempt to recreate or at least approximate with sufficient precision the vector representation of the request that is being processed and the respective quality of such attempts is assessed by the comparator device.

The quality assessment can be realized by training of an AI, such as a multiclass perceptron / machine learning based on sets of training data from the order history of the company. After all, typically numerous customer request have previously been processed by trained personnel that arrived at a suitable solution, which means that a high volume of training data is available, while keeping a suitable set of historical cases for verification of the training success. As these training data comprise real cases, they are also suited to test the functionality of each of the individual devices that are used for the automated processing of the request.

However, it should be noted that training data does not necessarily have to consist of or comprise historical data, but it is also possible to construct more abstract product descriptions that allow for training and use these abstract product descriptions as part of the training data or even as the only constituents of the training data. This approach is especially advantageous to facilitate the use of new products or new technologies. If, e.g., a new communication protocol is established, naturally devices that use this protocol have never been considered in historical data. To remedy this problem and avoid a bias towards systems that have been on the market for a longer period of time, abstract product descriptions can prove helpful.

It should be noted that in most cases more than one viable solution meeting the requirements of the customer request with sufficient precision will be provided by the comparator, which can be ranked by the output device. This ranking can involve company-specific rule sets which can e.g. involve factors like sales volume, profit margin, importance of the customer, production volume, current stock / applicable delivery times (if not stock is present) and typical rates of use of various products.

On the one hand, this can allow for picking a solution that is tailored to the company needs if several options for a technical system that meets the customer's request are available. For example, if a component with high available stocks that is rarely used is part of one of the compatible solutions, it may be preferable to the solution involving a component that is always short on supply, because it is frequently used.

Conversely, there may also be specific situations in which it is preferable to use a component that is always short on supply anyway, e.g. if the project for which the solution is used is to be realized in a country where a competitor's patent is in force that prevents the use of the readily available component or if an increase of the use of the component that is currently always short on supply may justify an increase of production numbers, but only if this increased use can be guaranteed for a sufficiently long time.

On the other hand, this feature may also be used to identify and rank the relevance of several co-pending requests for the company, allowing for an optimized sequence of processing of the individual requests.

Based on this ranked output of technical systems that are compatible with the customer's request that is provided by the output device, it becomes possible to react quickly to the request and propose a solution that meets the customer's needs in the best possible way while still considering company interests or even more than one alternative (e.g. one system that may be cheaper, but has a longer delivery time and one system which can be provided at once, but with a higher price tab).

## Claims

1. Method for automated composition of a technical system which technical system comprises one or more technical components, wherein the method comprises the automated steps of
- receiving a composition request comprising features of the system to be composed by a receiving device;
- identifying the objects and/or features of the requested technical system that is to be composed by an identification device based on the received composition request;
- transforming the identified objects and/or features of the technical system into a requested vector representation by an embedding device;
- comparing the requested vector representation of the technical system and vector representations of technical systems composed from available components by means of a comparator device, and
- outputting an obtained set of viable compositions of the requested technical system by an output device.

2. Method according to claim 1, wherein the comparing involves the use of a vector space space in order to determine whether vector representations of technical systems composed from available components that do not match the requested vector representation exactly represent a viable composition of the requested technical system.

3. Method according to claim 1 or 2, further comprising the step of prioritizing within the viable compositions of the requested technical system by a priorization device.

4. Method according to one of claims 1 to 3, wherein the comparing involves the application of a cascaded multi-model approach using a classifier by the embedding device.

5. Method according to one of claims 1 to 4, wherein the identifying involves the application of an iterative stage process wherein separate machine learning models are applied for separate stages by the identification device.

6. Device for automated composition of a technical system which technical system comprises one or more technical components, wherein the device comprises
- a receiving device configured for receiving a composition request comprising features of the system to be composed;
- an identification device configured for identifying the objects and/or features of the requested technical system that is to be composed based on the received composition request;
- an embedding device configured for transforming the identified objects and/or features of the technical system into a requested vector representation;
- a comparator device for comparing the requested vector representation of the technical system and vector representations of technical systems composed from available components, wherein the comparing involves the use of a vector space space in order to determine whether vector representations of technical systems composed from available components that do not match the requested vector representation exactly represent a viable composition of the requested technical system, an-dan output device configured for outputting an obtained set of viable compositions of the requested technical system.
